# EUROPÄISCHE PATENTSCHRIFT

(11) **EP 0 477 161 B1**
(45) Veröffentlichungstag und Bekanntmachung des Hinweises auf die Patenterteilung: **17.08.1994**
(21) Anmeldenummer: 91890122.4
(22) Anmeldetag: 12.06.1991
(51) Int. Cl.: A23L 1/29, A23L 1/307, A23L 1/308, A23L 1/05, A23L 1/052

(54) **Diätetisches Nahrungsmittel**
Dietetic food
Produit alimentaire diététique

(30) Priorität: 19.09.1990 AT 1900/90
(43) Veröffentlichungstag der Anmeldung: 25.03.1992
(73) Patentinhaber: Instantina Nahrungsmittel Entwicklungs- und Produktions Gesellschaft m.b.H, A-1030 Wien (AT); FIRMA Dr. A. & L. SCHMIDGALL, A-1121 Wien (AT)
(72) Erfinder: Wolfslehner, Leopold, Dipl.-Ing., Dr., A-7441 Pilgersdorf (AT)
(74) Vertreter: Barger, Werner, Dipl.-Ing.

(56) Entgegenhaltungen:
- EP-A- 0 089 056
- EP-A- 0 166 825
- EP-A- 0 222 967
- CH-A- 650 129
- DE-A- 3 046 414

## Beschreibung

Die Erfindung betrifft ein diätetisches Nahrungsmittel aus Guar, Pektin, Apfeltrester und/oder Apfelfaser und geschmacksgebenden Stoffen und Süßstoff.

Derartige Zusammensetzungen und ihre cholesterinspiegelsenkende Wirkung sind an sich bekannt. Sie werden übicherweise gemeinsam mit getrockneten Früchten, Honig, Weizenkleie, Nüssen und Samen bzw. Kernen zu Diätriegeln u.ähnl. verarbeitet und angeboten.

Nachteilig ist bei all diesen Präparaten und auch bei den klinisch getesten einzelnen Bestandteilen der obigen Zusammensetzung, daß der unangenehme Geschmack und die organoleptisch unangenehm empfundene Struktur nur durch Zutaten überdeckt werden kann, die entweder einen Teil der Wirkung zunichte machen oder Nebeneffekte bedingen, die unerwünscht sind.

So ist bei der Verabreichung als Riegel in der oben erwähnten Form, ein Energiegehalt von etwa 305 kJ pro Riegel angegeben, wobei ein Riegel nur 25 g hat. Darüber hinaus weist er das Äquivalent von einer Broteinheit auf, was bei der Behandlung von Diabetikern unannehmbar ist.

Es ist aus der DE-OS 30 46 414 ein diätetisches Nahrungsmittel bekannt, das aus 10 bis 30 Gew.-% lipidsenkenden pflanzlichen Quell- und Dickungsstoffen, 30 bis 45 Gew.-% Proteinen und über 45 Gew.-% Kleie besteht und durch Backen hergestellt wird. Das fertige Produkt kann wie Brot genossen werden oder nach Zerbröseln in Getränke oder Joghurt eingestreut werden.

Aus der CH-PS 650 129 ist eine Verabreichungsform für Galaktomannane bekannt, bei der es durch Verwendung spezieller Agglomerationsmittel und eines entsprechenden Agglomerierverfahrens möglich ist, die Quellung beim Anrühren mit Wasser zu verzögern und es erst nach Genuß im Magen zu einer Quellung kommen zu lassen. Dabei beträgt der Trockenanteil an Guar zumindest 70 Gew.-%, in den Beispielen über 80 Gew.-%; als Agglomerationsmittel werden Proteine verwendet, die den Zutritt des Wassers zum Galaktomannane und damit dessen Quellung verzögern, es können 5 bis 30 Gew.-% Proteine verwendet werden.

Aus der EP-A2 0 089 056 ist ein anrührbares diätetisches Mittel zur Regulierung des Cholersterinspiegels bekannt, das durch ein spezielles Verfahren aus Apfeltrester gewonnen wird, der mit Wasser oder wässerigem Alkohol extrahiert, einer physiologisch unbedenklichen Säure aufgeschlossen, neutralisiert und sodann unter Zusatz von Ascorbinsäure, entweder pellettiert oder nach Zugabe von Ascorbinsäure, Wasser und/oder verdünntem Alkohol agglomeriert wird.

Auch die in diesen Druckschriften angegebenen Lehren weisen Nachteile auf: Das Produkt gemäß der DE-OS enthält einen hohen Brennwert und ist nicht einfach zu verzehren. Das körnige Präparat gemäß der CH-PS betrifft nur die Verabreichung von Galaktomannane, die durch ihr Quellvermögen zur Reduzierung des Hungergefühls beiträgt. Die Wirkung auf den Cholesterinspiegel ist bei der angebenen Rezeptur nur gering. Das Produkt gemäß der EP-A2 hat eine im Vergleich dazu etwas stärkere chlosterinsenkende Wirkung, entspricht aber doch nur dem Verzehr der entsprechenden Menge Äpfel.

Es ist gegenüber diesem Stand der Technik das Ziel der Erfindung, eine Zusammensetzung der eingangs erwähnten Bestandteile anzugeben, die die erwähnten Nachteile nicht aufweist und mit der es besser als bisher möglich ist, auf besonders wirksame Art und ohne unangenehme Nebeneffekte das angestrebte Ziel der Herabsetzung des Cholersterinspiegels zu erreichen. Dazu muß noch ausgeführt werden, daß eine Verabreichung etwa eine 1/4 Stunde vor den Hauptmahlzeiten, die beste Wirkung mit sich bringt, da dann eine besonders innige Vermischung mit dem Verdauungsbrei gewährleistet ist und Gallensäure bzw. Nahrungscholersterin gut umhüllt bzw. gebunden wird. Eine Resorption der Gallensäure wird zum Teil vermieden und es kommt zu einer Nachproduktion von Gallensäure aus dem körpereigenen Chlosterindepot. Damit wird besonders die als gefährlich erkannte LDL-Fraktion des Cholesterins im Blut verringert.

Es sei nur am Rande erwähnt, daß durch die große Menge an Zuschlagsstoffen bei den bekannten Zusammensetzungen der eingangs erwähnten Art, diese Wirkung wesentlich herabgesetzt wird. Um dies und die zuvor genannten Nachteile zu vermeiden, schlägt die Erfindung vor, 25 - 40 Gew.-% Guar, 10 - 35 Gew.-% Pektinextrakt bzw. Pektin, 25 - 40 Gew.-% Apfeltrester und/oder Apfelfaser und 12% geschmackgebende Stoffe, Zitronensäure und Süßstoff zu einem wasserlöslichen Gemisch zu vereinen und in einer Menge von etwa 17 g pro 250 ml Wasser zu einem drinkfähigen dünnen Brei oder mit 180 ml Wasser zu einem dicken löffelfähigen Brei angerührt, zu verabreichen. Zusätzlich zu den angegebenen Mengen und ohne die Prozentverhältnisse der oben angegebenen Trockenmischung zu verändern, können der Mischung noch Mineralstoffe und Vitamine und wenn gewünscht, andere Hilfs- und Nebenstoffe zugefügt werden.

Durch die drinkbare Verabreichungsform ist es möglich, auf die bisher zumeist vorgesehenen Zusatzstoffe, die das Verabreichen annehmbar machen, zu verzichten und damit auch alle bisher aufgetrenenen wirkungsvermindernden Effekte ebenso zu vermeiden, wie die unerwünschten Zugaben Energie und kohlehydratreicher Beigaben.

Bevorzugt wird das Getränk durch natürliche und naturidentische Aromen sowie Zitronensäure auf Apfelgeschmack eingestellt, doch ist es auch möglich, den vom Apfeltrester bzw. den Apfelfasern herrührenden Apfelgeschmack durch andere Geschmacksrichtungen, insbesondere Banane zu überdünchen.

Das verwendete Pektin ist bevorzugt ein Apfelpektinextrakt, doch ist es auch möglich, jedes andere am Markt erhältliche Pektin zu verwenden, soweit es nur gut quellfähig ist.

Bei einer bevorzugten Ausführungsform der Erfindung werden jeweils etwa 5 g Guar, Pektinextrakt bzw. Pektin, Apfeltrester und/oder Apfelfaser und etwa 2 g der Aromen, Zitronensäure und des Süßstoffes pro Portion gerechnet.

Es hat sich gezeigt, daß es möglich ist, das Pektin in größerem Umfang durch Guar und Apfeltrester bzw. Apfelfaser zu ersetzen.

Es wurde festgestellt, daß bei den angegebenen Mischungsverhältnissen und der Verwendung der angegebenen Wassermengen ein angenehm zu trinkendes bzw. löffelndes Produkt erhalten wird, das ohne Widerwillen zu erregen, auch über längere Zeiträume eingenommen werden kann. Durch das Fehlen jeglichen Zuschlagstoffes ist die Wirkung wesentlich besser als bei Verabreichung der gleichen absoluten Menge an wirksamen Substanzen der bisherigen Zusammensetzungen. Da das Produkt gelöst bzw. aufgeschlämmt verabreicht wird, entfällt, die bei den anderen Produkten notwendige Flüssigkeitsaufnahme und damit die Gefahr eines Darmverschlusses.

Interessanteweise wurde festgestellt, daß durch den stark quellenden Charakter der erfindungsgemäßen Zusammensetzung ein Sättigungsgefühl auftritt, das dazu geeignet ist, die aufgenommene Nahrungsmenge zu verringern und langfristig einen Gewichtsverlust zu bewirken, was die Wirkung des Produktes in Bezug auf die Herabsetzung des Cholesterinspiegels unterstützt.

Es sind verschiedene Modifikationen der erfindungsgemäßen Zusammensetzung möglich, so können verschiedene Süßstoffarten ausgewählt werden und es ist für bestimmte Anwendungsgebiete auch möglich, statt des Süßstoffes Zucker oder ein anderes wasserlösliches natürliches Süßungsmittel zu verwenden. In diesem Fall ist es notwendig, die zugefügte Zuckermenge nicht zur erfindungsgemäßen Zusammensetzung zu rechnen, sondern so wie die gegebenenfalls verwendeten Mineralstoffe und Vitamine zu behandeln.

## Patentansprüche

1. Diätetisches Nahrungsmittel aus Guar, Pektin, Apfeltrester und/oder Apfelfaser und geschmacksgebenden Stoffen und Süßstoff, dadurch gekennzeichnet, daß 25 - 40 Gew.-% Guar, 10 - 35 Gew.-% Pektinextrakt bzw. Pektin, 25 - 40 Gew.-% Apfeltrester und/oder Apfelfaser und etwa 12 Gew.-% geschmacksgebender Stoffe und Zitronensäure und eine geringe Menge - etwa 0,5 Gew.-% -, bezogen auf die Gesamtzusammensetzung Süßstoff in wasserlöslicher bzw. suspendierbarer Form, gegebenenfalls unter Zugabe von Mineralstoffen und Vitaminen, die in die obere Zusammensetzung nicht eingerechnet werden, vorliegen.

2. Zusammensetzung nach Anspruch 1, dadurch gekennzeichnet, daß ohne Berücksichtigung der Mineralstoffe und Vitamine etwa 17 g der Zusammensetzung mit 150 - 280 ml Wasser angerührt, verabreicht werden.

3. Zusammensetzung nach Anspruch 1, dadurch gekennzeichnet, daß jeweils etwa 5 g Guar, Pektinextrakt bzw. Pektin und Apfelprodukt sowie etwa 2 g der anderen in die Zusammensetzung einzurechnenden Stoffe für eine Portion verwendet werden.

4. Zusammensetzung nach Anspruch 3, dadurch gekennzeichnet, daß der Anteil des Pektinextraktes bzw. Pektins bis auf 10 Gew.-% reduziert wird, wobei die entfallende Pektinmenge durch ein Guar-Apfelproduktgemisch ersetzt wird.

## Claims

1. Dietary foodstuff made from guar, pectin, pomace and/or apple fibre, flavourings and sweeteners, characterised by the presence of 25 - 40 per cent by weight guar, 10 - 35 per cent by weight pectin extract or pectin, 25 - 40 per cent by weight pomace and/or apple fibre and approximately 12 per cent by weight flavourings and citric acid together with a small quantity - approximately 0.5 per cent by weight -, related to the total composition, of sweetener in water-soluble or suspended form, with the possible addition of minerals and vitamins not included in the composition defined above.

2. Composition in accordance with Claim 1, characterised by the administration of approximately 17 g of the composition - disregarding minerals and vitamins - mixed with 150 - 280 ml water.

3. Composition in accordance with Claim 1, characterised by the use per portion of approximately 5 g guar, pectin extract or pectin and apple products, together with approximately 2 g of the other substances included in the composition.

4. Composition in accordance with Claim 3, characterised by the reduction of the proportion of pectin extract or pectin to 10 per cent by weight, whereby the quantity of pectin dispensed with is replaced by a mixture of guar and apple product.

## Revendications

1. Produit alimentaire diététique à base de gomme de guar, de pectine, de marc de pomme et/ou fibre de pomme et d'arômes et d'édulcorant, caractérisé en ce que sont présents de 25 à 40 % en masse de gomme de guar, de 10 à 35 % en masse d'extrait de pectine ou de pectine, de 25 à 40 % en masse de marc de pomme et/ou de fibre de pomme et environ 12 % en masse d'arômes et d'acide citrique et une quantité d'édulcorant faible - environ 0,5 % en masse - par rapport à la composition totale, sous forme soluble dans l'eau ou pouvant être mise en suspension, le cas échéant avec addition de minéraux et de vitamines qui ne sont pas inclus dans la composition ci-dessus.

2. Composition selon la revendication 1, caractérisée en ce que, sans considération des minéraux et des vitamines, on administre environ 17 g de la composition délayée dans 150-280 ml d'eau.

3. Composition selon la revendication 1, caractérisée en ce que sont utilisés pour une ration respectivement environ 5 g de gomme de guar, d'extrait de pectine ou de pectine et de produit à base de pomme ainsi qu'environ 2 g des autres substances à inclure dans la composition.

4. Composition selon la revendication 3, caractérisée en ce que la proportion d'extrait de pectine ou de pectine est réduite à 10 % en masse, la quantité de pectine supprimée étant remplacée par un mélange de gomme de guar et de produit à base de pomme.
